# EUROPÄISCHE PATENTSCHRIFT

(11) **EP 1 132 254 B1**
(45) Veröffentlichungstag und Bekanntmachung des Hinweises auf die Patenterteilung: **03.12.2003**
(21) Anmeldenummer: 01104010.2
(22) Anmeldetag: 20.02.2001
(51) Int. Cl.: B60N 2/46

(54) **Armlehne, insbesondere für Fahrzeuge**
Arm rest for vehicles
Accoudoir pour véhicules

(30) Priorität: 08.03.2000 DE 10010798
(43) Veröffentlichungstag der Anmeldung: 12.09.2001
(73) Patentinhaber: GRAMMER Automotive GmbH, 92224 Amberg (DE)
(72) Erfinder: Büllesbach, Peter, 42292 Wermelskirchen (DE); Jahic, Ervin, 40749 Düsseldorf (DE)
(74) Vertreter: Patentanwälte Ostriga & Sonnet

(56) Entgegenhaltungen:
- DE-U- 29 901 887
- US-A- 5 702 157
- US-A- 5 984 416

## Beschreibung

Die Erfindung betrifft eine Armlehne, insbesondere für Fahrzeuge, entsprechend dem Oberbegriff des Anspruchs 1. Eine solche Armlehne ist in dem DE 299 01 887 U1 beschrieben.

Bei der bekannten Vorrichtung handelt es sich um eine tastenlose Armlehne, bei welcher zwei als Blattfedern ausgebildete Zungenweichen das mit einem Steuerstift versehene Sperrglied eines Zahnrichtgesperres beim Aufrichten und Herunterschwenken des Armlehnenkörpers steuern. Die innenverzahnte Zahnbahn des Zahnrichtgesperres ist etwa teilkreisbogenartig über einen Umfangswinkelbereich von ca. 90° ausgebildet und weist für die unterste Armlehnenposition einige Rastzähne und für die oberste Armlehnenposition eine Rastvertiefung auf. Das Sperrglied ist bei der bekannten Armlehne als am Armlehnenkörper schwenkbar gelagerte Klinke ausgebildet.

Die beiden etwa blattfederartig ausgebildeten Zungenweichen der bekannten Armlehne übergreifen den Steuerstift mit ihrer der Zahnbahn zugewandten Innensteuerbahn in Freilaufdrehrichtung und distanzieren den Steuerstift mit ihrer der Zahnbahn abgewandten Außensteuerbahn von der Zahnbahn, wenn der Armlehnenkörper in der der Freilaufdrehrichtung entgegengesetzten Drehrichtung von seiner aufgerichteten Position wieder in seine unterste Position versetzt werden soll. Auf diese Weise ist die Sperrwirkung des Zahnrichtgesperres während der Rückschwenkbewegung des Armlehnenkörpers von seiner aufgerichteten Position in seine unterste Position durch Umsteuerung des Sperrgliedes ausgeschaltet.

Die bei der bekannten Armlehne vorhandene, in der aufgerichteten Stellung des Armlehnenkörpers wirksame, zweite Zungenweiche sorgt für eine Umsteuerung des Sperrkörpers etwa nach halbem Abwärtsschwenkweg, so dass dem Fahrgast, ausgehend von dieser Zwischenposition, zusätzlich die Möglichkeit verbleibt, den Armlehnenkörper erneut aufzurichten, ohne diesen zuvor in seine unterste Position zurückschwenken zu müssen.

An beiden Zungenweichen geschieht die Umsteuerung des Steuerstiftes bei der durch das DE 299 01 887 U1 bekannten Armlehne derart, dass der Steuerstift beim Herabschwenken des Armlehnenkörpers zunächst über das Zungenende auf die von der Zahnbahn abgewandte Außensteuerbahn der Zungenweiche hinaufgleitet. Bei fortgesetztem Herabschwenken des Armlehnenkörpers gleitet der Steuerstift schließlich über das Ende des Befestigungsbereichs der Zungenweiche hinweg und verliert so mit Verlassen der Außensteuerbahn deren Unterstützung, so dass das Sperrglied durch eine Federrückstellkraft zur Zahnbahn hin bewegt werden kann. Das am Befestigungsbereich befindliche stirnseitige Ende der jeweiligen Zungenweiche definiert daher beim Bekannten eine die Bewegung des Steuerstiftes beeinflussende Steuerkante, welche zugleich die Zustellung des Sperrgliedes in Richtung Zahnbahn veranlasst.

Ausgehend von der bekannten Armlehne gemäß dem DE 299 01 887 U1, liegt der Erfindung die Aufgabe zugrunde, eine tastenlos bedienbare Armlehne mit einem solchen Zahnrichtgesperre zu schaffen, dessen die Zustellung des Sperrgliedes veranlassende Steuerkante der jeweiligen Zungenweiche unabhängig vom Befestigungsbereich der Zungenwurzel angeordnet sein kann.

Gemeinsam mit den Merkmalen des Oberbegriffs des Anspruchs 1 hat die Erfindung diese Aufgabe dadurch gelöst, dass die Steuerkante für den Steuerstift des Sperrgliedes von einer zwischen Zungenwurzel und Zungenende angeordneten, einseitig von einem Rand der Zungenweiche ausgehenden Ausklinkung gebildet ist.

Entsprechend der Erfindung ist die dem Befestigungsbereich benachbarte Steuerkante von der dem Steuerstift zugewandten, die Außensteuerbahn unterbrechenden, Randkante der Ausklinkung definiert. Mit dieser erfindungsgemäßen Ausbildung braucht der Steuerstift auf der Außensteuerbahn nicht mehr den zungenwurzelseitigen Befestigungsbereich zu überfahren, um zur Steuerkante zu gelangen. Die je nach Anwendungsfall individuelle Ausgestaltung des zungenwurzelseitigen Befestigungsbereichs ist damit unabhängig von der Anordnung der Steuerkante.

Obwohl es entsprechend der Erfindung grundsätzlich möglich ist, das Sperrglied als Sperrklinke auszubilden, besteht eine bevorzugte erfindungsgemäße Bauform darin, dass das Sperrglied einen translatorisch geführten Sperrschieber darstellt, dessen der Zahnbahn zugewandte Stirnfläche mindestens einen Rastvorsprung trägt.

In weiterer Ausgestaltung der Erfindung ist der Sperrschieber in einem Führungskanal des Armlehnenkörpers aufgenommen. Für den Fall, dass der Sperrschieber einen unrunden, wie z.B. rechteckigen, insbesondere quadratischen, Querschnitt aufweist und der Querschnitt des Führungskanals dem Querschnitt des Sperrschiebers angepasst ist, ist letzterer auf einfache Weise gegen Drehung um seine Längsachse gesichert, so dass der Rastvorsprung des Sperrschiebers stets genau orientiert zwischen die Rastzähne der Zahnbahn eingreifen kann.

Die Zustellung des Sperrschiebers in Richtung Zahnbahn ist entsprechend der Erfindung so ausgestaltet, dass die der Zahnbahn abgewandte Stirnfläche des Sperrschiebers mittels einer Druckfeder in Zustellrichtung belastet ist.

Eine weitere erfindungsgemäße Ausführungsform sieht vor, dass die Zungenweiche ein gegossenes Formteil ist, welches an der Zungenwurzel mittels eines Gelenks am Lagerbereich gehalten ist. Dabei kann die Zungenweiche ein Spritzgussteil sein, wobei das Zungenende mittels einer Zustellfeder gegen die Zahnbahn gehalten ist.

Weitere Ausgestaltungen entsprechend der Erfindung ergeben sich aus zusätzlichen Unteransprüchen.

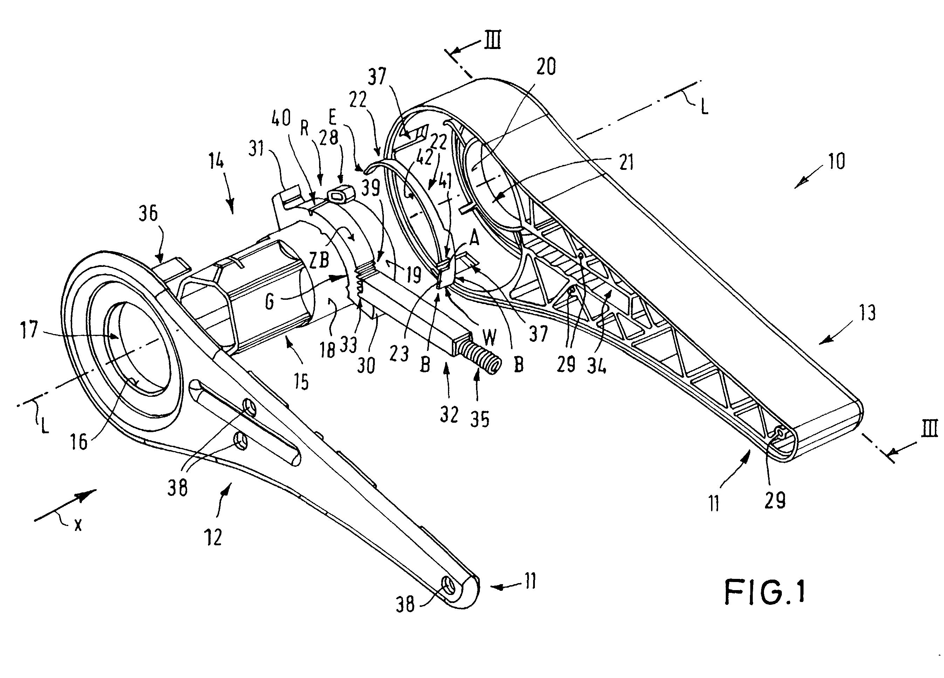

In den Zeichnungen ist ein bevorzugtes Ausführungsbeispiel entsprechend der Erfindung näher dargestellt, es zeigt
Fig. 1 in einer ersten Blickrichtung x eine auseinandergezogene räumliche Darstellung einer Armlehne unter Weglassung eines den Armlehnenkörper umkleidenden Polsterkörpers,

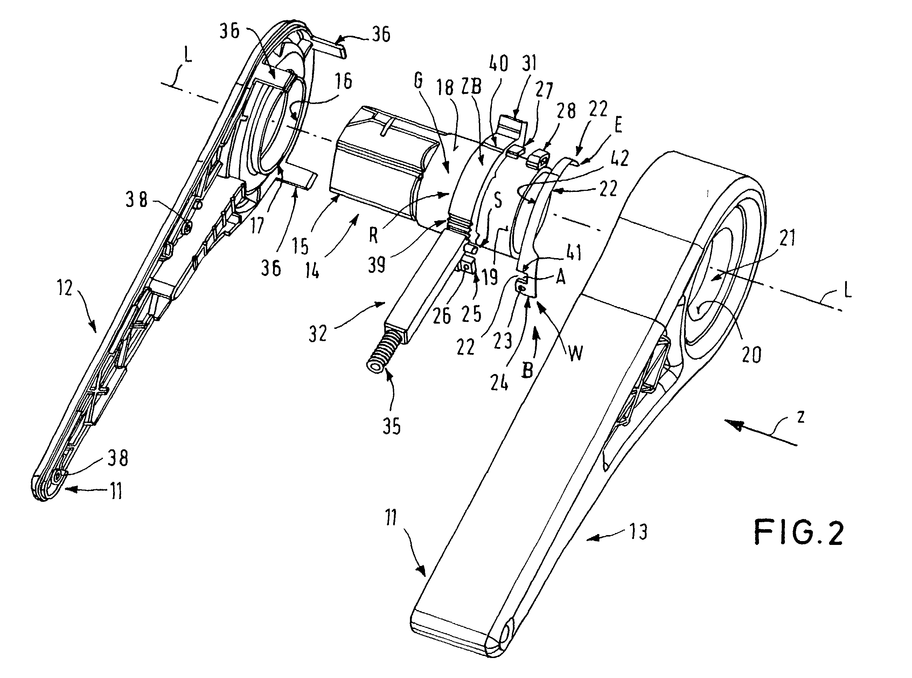

Fig. 2 in Anlehnung an die Darstellung gemäß Fig. 1 die Armlehne aus einer der ersten Blickrichtung x entgegengesetzten zweiten Blickrichtung z und
Fig. 3 eine Längsschnittansicht etwa entsprechend der in Fig. 1 mit III-III bezeichneten Schnittlinie, jedoch im zusammengebauten Zustand der Armlehne.

In den Zeichnungen ist eine Armlehne insgesamt mit der Bezugsziffer 10 bezeichnet. Ein den Armlehnenkörper 11 umgebender Polsterkörper ist nicht dargestellt.

Der Armlehnenkörper 11 setzt sich aus zwei schalenartigen Einzelkörpern 12 und 13 zusammen.

Zur Armlehne 10 gehört außerdem ein im Einbauzustand fest, insbesondere fahrzeugfest, angeordneter Lagerbereich 14. Der Armlehnenkörper 11 kann auf dem Lagerbereich 14 um die geometrische Lagerachse L aufwärts in Richtung u und abwärts in Richtung v verschwenkt werden.

Der Lagerbereich 14 ist zu seiner Befestigung im Einbaubereich, beispielsweise im Fahrzeugeinbaufeld, mit einem Einsteckende 15 versehen, welches einen unrunden Querschnitt, insbesondere einen Mehrkantquerschnitt, aufweist. Zur Lagerung der kreiszylindrischen Innenmantelfläche 16 der Lagerschale 17 des schalenartigen Einzelkörpers 12 ist der Lagerbereich 14 benachbart eines sich nur über einen Teilkreis von nahezu 180° erstreckenden Ringkörpers R mit einer eine kreiszylindrische Außenmantelfläche 18 darstellenden Lagerfläche versehen. Der Ringkörper R ist fest, insbesondere einstückig, mit dem Lagerbereich 14 verbunden.

Auf der der kreiszylindrischen Außenmantelfläche 18 abgewandten Seite des Ringkörpers R weist der Lagerbereich 14 als kreiszylindrische Außenmantelfläche 19 eine weitere Lagerfläche auf, welche dazu bestimmt ist, mit der eine Lagerfläche bildenden kreiszylindrischen Innenmantelfläche 20 der Lagerschale 21 des schalenartigen Einzelkörpers 13 zusammenzuwirken.

Eine aus eigenelastischem Werkstoff, hier aus Federstahl, bestehende, etwa blattfederartige Zungenweiche 22 weist an einem Befestigungsbereich B einen mit einer Nietöffnung 23 versehenen Befestigungsansatz 24 auf, welcher an einem außen quer am Ringkörper R angeordneten, ebenfalls eine Nietöffnung 26 aufweisenden Befestigungsfortsatz 25 mittels Nietbefestigung anzubringen ist.

Außerdem ist der Ringkörper R mit einem quer von ihm abstehenden Steckbefestigungsansatz 27 versehen, auf welchen ein der Geräuschisolation dienender Puffer 28 mit seiner zentralen Stecköffnung aufzustecken ist. Der Puffer 28 kann z.B. aus einem weichelastischen Kunststoff hergestellt sein.

Wenn die Zungenweiche 22 montiert ist, stützt sich deren Zungenende E, Klappergeräusche verhindernd, lediglich druckfest auf der äußeren Mantelfläche des Puffers 28 ab. Das feste Ende der Zungenweiche 22, die Zungenwurzel also, ist insgesamt mit W bezeichnet. Im zusammengebauten Zustand der Armlehne 10 erstreckt sich die Lagerschale 21 des Einzelkörpers 13 mit ihrer Innenmantelfläche 20 auf der Außenmantelfläche 19 des Lagerbereichs 14 seitlich neben dem Puffer 28.

Der Ringkörper R weist zwischen zwei Schwenkbegrenzungsanschlägen 30, 31 eine für einen Sperrschieber 32 bestimmte, insgesamt mit ZB bezeichnete Zahnbahn auf, welche mit einem an der inneren Stirnseite des Sperrschiebers 32 angeordneten Rastvorsprung 33 zusammenwirkt. Der Ringkörper R und der Sperrschieber 32 bilden gemeinsam ein Zahnrichtgesperre G.

Der einen quadratischen Querschnitt aufweisende Sperrschieber 32 ist in einem innerhalb des schalenartigen Einzelkörpers 13 vorgesehenen Führungskanal 34, welcher ebenfalls einen quadratischen Querschnitt aufweist, gegen Drehung um seine Längsachse gesichert, aufgenommen. Die nach außen weisende Stirnseite des Sperrschiebers 22 ist mittels einer ebenfalls im Führungskanal 34 aufgenommenen Schraubendruckfeder 35 ständig rückstellbelastet.

Im Zusammenhang der Zeichnungen ist vorstellbar, dass die beiden schalenartigen Einzelkörper 12, 13 des Armlehnenkörpers 11 entlang der geometrischen Lagerachse L zusammengeschoben und dabei über Rasthaken 36 und korrelierende Rastvertiefungen 37 miteinander steckverrastet werden können. Zusätzlich erfolgt noch eine Schraubbefestigung, wozu der schalenartige Einzelkörper 13 mit Sacklöchern 29 und der schalenartige Einzelkörper 12 mit korrespondierenden eingesenkten Durchgangslöchern 38 versehen ist.

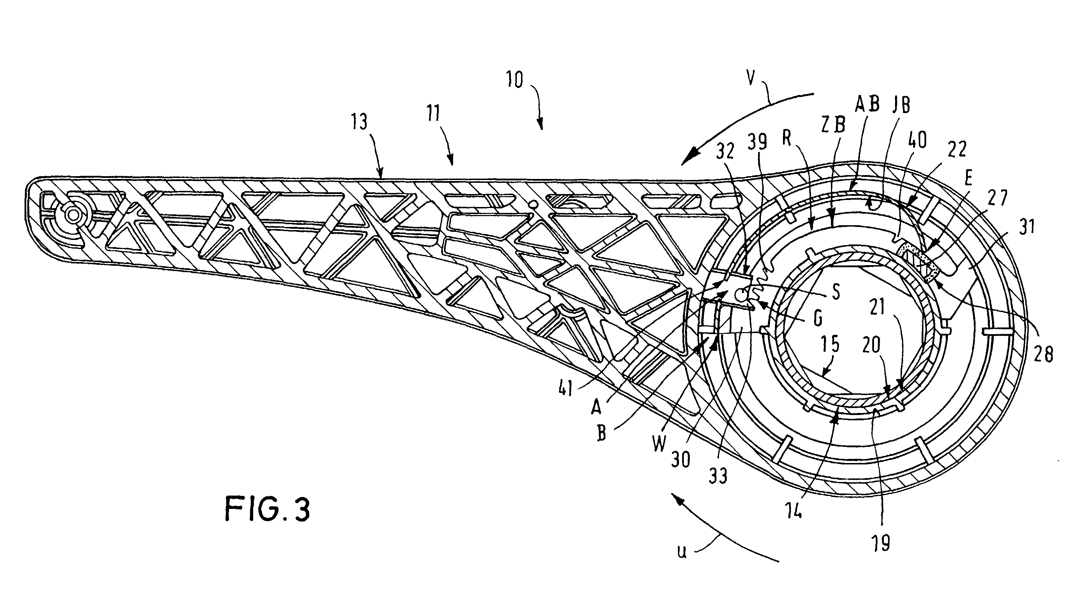

Die Funktion der Armlehne 10 lässt sich am besten anhand von Fig. 3 erklären:

In der Darstellung gemäß Fig. 3 befindet sich der Armlehnenkörper 11 in seiner niedrigsten Schwenkstellung. In dieser Schwenkstellung ist der Rastvorsprung 33 in dem untersten Zwischenraum der von Rastzähnen 39 gebildeten Zahnreihe aufgenommen. Die Flanken der Rastzähne 39 sind so gestaltet, dass sie ein Hochschwenken des Armlehnenkörpers 11 in Aufwärtsschwenkrichtung u gestatten, aber ein Zurückschwenken des Armlehnenkörpers 11 in Abwärtsschwenkrichtung v sperren.

Wenn man den Armlehnenkörper 11, ausgehend von dessen untersten Position gemäß Fig. 3, in Aufwärtsschwenkrichtung u nach oben in seine aufgerichtete Lage verschwenkt, so gelangt der Rastvorsprung 33 des durch die Schraubendruckfeder 35 ständig radial nach innen rückstellbelasteten Sperrschiebers 32 schließlich in die Rastausnehmung 40 der insgesamt mit ZB bezeichneten Zahnbahn.

Während dieser beschriebenen Schwenkbewegung des Armlehnenkörpers 11 in Aufwärtsschwenkrichtung u befindet sich ein vom Sperrschieber 32 parallel zur geometrischen Lagerachse L abstehender Steuerstift S zwischen der Zahnbahn ZB und der letzteren zugewandten, von der Zungenweiche 22 gebildeten Innensteuerbahn IB.

Da die in Richtung der Uhrzeigerdrehung vordere Innenfläche der Rastausnehmung 40 nicht radial sondern schräg nach außen divergierend bezüglich der geometrischen Lagerachse L derart verläuft, dass eine weitere Schwenkbewegung des Armlehnenkörpers 11 in Aufwärtsschwenkrichtung u nicht behindert wird, stößt der Steuerstift S schließlich unterhalb des Zungenendes E gegen die Innensteuerbahn IB, hebt das Zungenende E entgegen der Eigenfederkraft der Zungenweiche 22 an und gleitet weiter, bis das Zungenende E auf den Puffer 28 zurückfedert. In dieser relativen Schwenklage schlägt der Sperrschieber 32 schließlich am Schwenkbegrenzungsanschlag 31 an, welcher eine weitere Schwenkbewegung in Richtung u verhindert.

Wenn sodann eine Rückwärtsschwenkbewegung in Abwärtsschwenkrichtung v eingeleitet wird, gelangt der Steuerstift S über das Zungenende E der Zungenweiche 22 außen auf die Außensteuerbahn AB, welche den Steuerstift S im weiteren Verlauf der Schwenkbewegung in Abwärtsschwenkrichtung v angehoben hält und somit den Rastvorsprung 33 so lange außer Eingriff mit der Zahnbahn ZB versetzt, bis die Außensteuerbahn AB an einer Steuerkante 41 endet und der Steuerstift S unter der Wirkung der Druckfeder 35 durch eine Ausklinkung A hindurchbewegt wird. Dies hat zur Folge, dass der Rastvorsprung 33 erneut mit dem durch die Rastzähne 39 gebildeten untersten Zwischenraum in Eingriff gerät.

Die Ausklinkung A stellt eine rechteckig konturierte einseitig offene Aussparung dar, die von dem der Zahnbahn ZB und dem Sperrschieber 32 mit Steuerstift S zugewandten Längsrand 42 der Zungenweiche 22 ausgeht.

Im Bereich der Zungenwurzel W und der Ausklinkung A ist die blattfederartige Zungenweiche 22 breiter ausgebildet als in ihrem bis zum Zungenende E reichenden restlichen Längenbereich.

## Patentansprüche

1. Armlehne (10), insbesondere für Fahrzeuge, mit einem Armlehnenkörper (11 ), welcher mit einem begrenzten Schwenkwinkel um einen fest angeordneten Lagerbereich (14) schwenkbar ist, der eine sich zu seiner Schwenkachse (L) koaxial erstreckende, mindestens teilweise mit Ratzähnen (29) versehene Zahnbahn (ZB) eines Zahnrichtgesperres (G) bildet, während der Armlehnenkörper (11 ) das in seine Sperrstellung hinein federbelastet zustellbare korrespondierende Sperrglied (32) lagert, welches einen quer zur Bewegungsrichtung des Sperrgliedes (32) vorragenden Steuerstift (S) bildet, dem mindestens eine mit ihrer Zungenwurzel (W) am Lagerbereich (14) schwenkbar gehaltene Zungenweiche (22) zugeordnet ist, welche den Steuerstift (S) mit ihrer der Zahnbahn (ZB) zugewandten Innensteuerbahn (IB) von ihrer Zungenwurzel (W) bis hin zu ihrem gegen die Zahnbahn (ZB) gehaltenen Zungenende (E) in Freilaufdrehrichtung (u) übergreift, und welche den Steuerstift (S) bei umgekehrter Drehrichtung (v) mit ihrer der Zahnbahn (ZB) abgewandten Außensteuerbahn (AB) von ihrem Zungenende (E) bis hin zu einer der Zungenwurzel (W) benachbarten Steuerkante (41 ) untergreift, die den Steuerstift (S) in Zustellrichtung des Sperrgliedes (32) freigibt, **dadurch gekennzeichnet, dass** die Steuerkante (41 ) für den Steuerstift (S) des Sperrgliedes (32) von einer zwischen Zungenwurzel (W) und Zungenende (E) angeordneten, einseitig von einem Längsrand (42) der Zungenweiche (22) ausgehenden Ausklinkung (A) gebildet ist.

2. Armlehne nach Anspruch 1, **dadurch gekennzeichnet, dass** das Sperrglied einen translatorisch geführten Sperrschieber (32) darstellt, dessen der Zahnbahn (ZB) zugewandte Stirnfläche mindestens einen Rastvorsprung (33) trägt.

3. Armlehne nach Anspruch 1 oder nach Anspruch 2, **dadurch gekennzeichnet, dass** der Sperrschieber (32) bezüglich des Lagerbereichs (14) radial verschieblich angeordnet ist.

4. Armlehne nach einem der Ansprüche 1 bis 3, **dadurch gekennzeichnet, dass** der Sperrschieber (32) stabförmig ausgebildet ist.

5. Armlehne nach einem der Ansprüche 1 bis 4, **dadurch gekennzeichnet, dass** der Sperrschieber (32) einen unrunden, wie z.B. rechteckigen, insbesondere einen quadratischen, Querschnitt aufweist.

6. Armlehne nach einem der Ansprüche 1 bis 5, **dadurch gekennzeichnet, dass** der Sperrschieber (32) in einem Führungskanal (34) des Armlehnenkörpers (11 ) aufgenommen ist.

7. Armlehne nach Anspruch 6, **dadurch gekennzeichnet, dass** der Querschnitt des Führungskanals (34) dem Querschnitt des Sperrschiebers (32) angepasst ist.

8. Armlehne nach einem der Ansprüche 1 bis 7, **dadurch gekennzeichnet, dass** die der Zahnbahn (ZB) abgewandte Stirnfläche des Sperrschiebers (32) mittels einer Druckfeder (35) in Zustellrichtung belastet ist.

9. Armlehne nach einem der Ansprüche 1 bis 8, **dadurch gekennzeichnet, dass** die Zungenweiche ein gegossenes Formteil ist.

10. Armlehne nach Anspruch 9, **dadurch gekennzeichnet, dass** die ein gegossenes Formteil bildende Zungenweiche an ihrer Zungenwurzel mittels eines Gelenks am Lagerbereich gehalten ist.

11. Armlehne nach Anspruch 9 oder nach Anspruch 10, **dadurch gekennzeichnet, dass** die Zungenweiche ein Kunststoffspritzgussteil ist.

12. Armlehne nach einem der Ansprüche 9 bis 11, **dadurch gekennzeichnet, dass** das Zungenende mittels einer Zustellfeder gegen die Zahnbahn (ZB) gehalten ist.

13. Armlehne nach einem der Ansprüche 1 bis 12, **dadurch gekennzeichnet, dass** das Zungenende (E) auf einem insbesondere der Geräuschisolation dienenden Puffer (28) abgestützt ist.

14. Armlehne nach einem der vorangehenden Ansprüche, **dadurch gekennzeichnet, dass** insbesondere bei einer aus eigenelastischem Werkstoff, insbesondere aus Federmetall, wie z.B. aus Federstahl, bestehenden, etwa blattfederartigen Zungenweiche (22) deren die Steuerkante (41 ) enthaltender Zungenwurzel-Bereich (W) breiter ausgebildet ist als der bis zum Zungenende (E) reichende restliche Längenbereich der Zungenweiche (22).

15. Armlehne nach einem der Ansprüche 1 bis 14, **dadurch gekennzeichnet, dass** unmittelbar neben der Zahnbahn (ZB) ein Befestigungsfortsatz (25) zur Schraub- oder Nietbefestigung der Zungenwurzel (W) angeordnet ist.

## Claims

1. Armrest (10), in particular for vehicles, comprising an armrest body (11), which is pivotable through a limited swivel angle about a bearing region (14), which is disposed in a fixed manner and forms an, in relation to its swivelling axis (L), coaxially extending tooth path (ZB) provided at least partially with detent teeth (29) of a ratchet and pawl mechanism (G), while the armrest body (11) supports the corresponding locking member (32), which is feedable in a spring-loaded manner into its locking position and forms a control pin (S), which projects transversely relative to the direction of motion of the locking member (32) and with which is associated at least one tongue switch (22), which is pivotally supported by its tongue root (W) on the bearing region (14) and which with its inner control path (IB) facing the tooth path (ZB) and extending from its tongue root (W) to its tongue end (E) supported against the tooth path (ZB) overlaps the control pin (S) in free-running direction of rotation (u), and which with its outer control path (AB) remote from the tooth path (ZB) and extending from its tongue end (E) to a control edge (41), which is adjacent to the tongue root (W) and releases the control pin (S) in feed direction of the locking member (32), underlies the control pin (S) in the reverse direction of rotation (v), **characterized in that** the control edge (41) for the control pin (S) of the locking member (32) is formed by a notch (A), which is disposed between tongue root (W) and tongue end (E) and emanates on one side from a longitudinal edge (42) of the tongue switch (22).

2. Armrest according to claim 1, **characterized in that** the locking member is a linearly guided locking slide (32), of which the end face facing the tooth path (ZB) carries at least one detent projection (33).

3. Armrest according to claim 1 or according to claim 2, **characterized in that** the locking slide (32) is disposed so as to be radially displaceable relative to the bearing region (14).

4. Armrest according to one of claims 1 to 3, **characterized in that** the locking slide (32) is of a bar-shaped design.

5. Armrest according to one of claims 1 to 4, **characterized in that** the locking slide (32) has a non-circular cross section, such as e.g. a rectangular, in particular a square cross section.

6. Armrest according to one of claims 1 to 5, **characterized in that** the locking slide (32) is accommodated in a guide channel (34) of the armrest body (11).

7. Armrest according to claim 6, **characterized in that** the cross section of the guide channel (34) is adapted to the cross section of the locking slide (32).

8. Armrest according to one of claims 1 to 7, **characterized in that** the end face of the locking slide (32) remote from the tooth path (ZB) is loaded in feed direction by means of a compression spring (35).

9. Armrest according to one of claims 1 to 8, **characterized in that** the tongue switch is a cast shaped part.

10. Armrest according to claim 9, **characterized in that** the tongue switch forming a cast shaped part is held at its tongue root by means of a joint on the bearing region.

11. Armrest according to claim 9 or according to claim 10, **characterized in that** the tongue switch is a plastic injection-moulded part.

12. Armrest according to one of claims 9 to 11, **characterized in that** the tongue end is held by means of a feed spring against the tooth path (ZB).

13. Armrest according to one of claims 1 to 12, **characterized in that** the tongue end (E) is supported on a buffer (28) used, in particular, for soundproofing.

14. Armrest according to one of the preceding claims, **characterized in that**, particularly given an approximately leaf-spring-like tongue switch (22) made of inherently elastic material, in particular of spring metal, such as e.g. of spring steel, the tongue root region (W) thereof comprising the control edge (41) is of a wider construction than the remaining longitudinal region of the tongue switch (22) extending up to the tongue end (E).

15. Armrest according to one of claims 1 to 14, **characterized in that** disposed immediately adjacent to the tooth path (ZB) is a fastening extension (25) for the screw- or rivet fastening of the tongue root (W).

## Revendications

1. Accoudoir (10), en particulier pour véhicules, avec un corps d'accoudoir (11) susceptible de pivoter, de la valeur d'un angle de pivotement limité, autour d'une zone de palier (14) disposée rigidement, qui forme une piste dentée (ZB), s'étendant co-axialement à son axe de pivotement (L), munie au moins partiellement de dents d'encliquetage (39), d'un mécanisme à encliquetage directionnel denté (G), tandis que le corps d'accoudoir (11), à sa position de blocage, sert au montage en palier de l'organe de blocage (32) correspondant, pouvant être bloqué sous l'effet d'une charge élastique, l'organe de blocage (32) formant une tige de commande (S) faisant saillie transversalement par rapport à la direction de déplacement de l'organe de blocage (32), à laquelle est associée au moins un verrou à languette (22), monté à pivotement, par sa racine de languette (W,) sur la zone de palier (14), le verrou à languette (22), dans la direction de la rotation en roue libre (u), entourant par le dessus la tige de commande (S), par sa piste de commande intérieure (IB), tournée vers la piste dentée (ZB), depuis sa racine de languette (W) jusqu'à son extrémité de languette (E) maintenue contre la piste dentée (ZB) et, dans le sens de rotation (v) inverse, saisissant par le dessous la tige de commande (S), par sa piste de commande extérieure (AB) opposée à la piste dentée (ZB), depuis son extrémité de languette (E) jusqu'à une arête de commande (41) voisine de la racine de languette (W), l'arête de commande (41) libérant la tige de commande (S), dans la direction de fermeture de l'organe de blocage (32), **caractérisé en ce que** l'arête de commande (41), prévue pour la tige de commande (S) de l'organe de blocage (32), est formée par un décrochement (A), disposé entre la racine de languette (W) et l'extrémité de languette (E), partant, à une extrémité, d'un bord longitudinal (42) du verrou à languette (22).

2. Accoudoir selon la revendication 1, **caractérisé en ce que** l'organe de blocage forme un coulisseau de blocage (32) guidé en translation, dont la face frontale, tournée vers la piste dentée (ZB), porte au moins une saillie d'encliquetage (33).

3. Accoudoir selon la revendication 1 ou selon la revendication 2, **caractérisé en ce que** le coulisseau de blocage (32) est disposé de façon mobile radialement par rapport à la zone formant palier (14).

4. Accoudoir selon l'une des revendications 1 à 3, **caractérisé en ce que** le coulisseau de blocage (32) est réalisé en forme de barre.

5. Accoudoir selon l'une des revendications 1 à 4, **caractérisé en ce que** le coulisseau de blocage (32) présente une section transversale non-ronde, telle que, par exemple, rectangulaire, en particulier quadratique.

6. Accoudoir selon l'une des revendications 1 à 5, **caractérisé en ce que** le coulisseau de blocage (32) est logé dans un canal de guidage (34) du corps d'accoudoir (11).

7. Accoudoir selon la revendication 6, **caractérisé en ce que** la section transversale du canal de guidage (34) est adaptée à la section transversale du coulisseau de blocage (32).

8. Accoudoir selon l'une des revendications 1 à 7, **caractérisé en ce que** la face frontale, opposée à la piste dentée (ZB), du coulisseau de blocage (32) est chargée dans la direction de la fermeture à l'aide d'un ressort de compression (35).

9. Accoudoir selon l'une des revendications 1 à 8, **caractérisé en ce que** le verrou à languette est une pièce profilée, obtenue de moulage.

10. Accoudoir selon la revendication 9, **caractérisé en ce que** le verrou à languette, formant une pièce profilée de moulage, est maintenu à sa racine de languette, au moyen d'une articulation prévue sur la zone de palier.

11. Accoudoir selon la revendication 9 ou selon la revendication 10, **caractérisé en ce que** le verrou à languette est une pièce en matière synthétique, obtenue par moulage par injection.

12. Accoudoir selon l'une des revendications 9 à 11, **caractérisé en ce que** l'extrémité de languette est maintenue contre la piste dentée (ZB) à l'aide d'un ressort de fermeture.

13. Accoudoir selon l'une des revendications 1 à 12, **caractérisé en ce que** l'extrémité de languette (E) est mise en appui sur un tampon (28), servant en particulier à l'isolation sonore.

14. Accoudoir selon l'une des revendications précédentes, **caractérisé en ce que**, en particulier dans le cas d'un verrou à languette (22), par exemple du genre d'un ressort à lame, formé d'un matériau présentant une élasticité propre, en particulier en métal à ressort, tel que, par exemple, en acier à ressort, sa zone de racine de languette (W), contenant l'arête de commande (41), est plus large que la zone longitudinale restante, allant jusqu'à l'extrémité de languette (E), du verrou à languette (22).

15. Accoudoir selon l'une des revendications 1 à 14, **caractérisé en ce que**, directement à côté de la piste dentée (ZB), est disposé un prolongement de fixation (25), pour assurer la fixation par vissage ou rivetage de la racine de languette (W).
